# EUROPÄISCHE PATENTSCHRIFT

(11) **EP 2 739 677 B1**
(45) Veröffentlichungstag und Bekanntmachung des Hinweises auf die Patenterteilung: **27.05.2015**
(21) Anmeldenummer: 12734867.0
(22) Anmeldetag: 02.07.2012
(51) Int. Cl.: C08K 3/18, C08K 5/00, C08K 7/20, C08L 33/08, C09D 4/06, E01F 9/04

(54) **GERUCHSARME (METH)ACRYLISCHE REAKTIONSHARZE**
LOW ODOR (METH)ACRYLATE REACTIVE RESIN
RESIN RÉACTIVE (METH)ACRYLIQUE À ODEUR RÉDUITE

(30) Priorität: 02.08.2011 DE 102011109139
(43) Veröffentlichungstag der Anmeldung: 11.06.2014
(73) Patentinhaber: Evonik Röhm GmbH, 64293 Darmstadt (DE)
(72) Erfinder: HILF, Stefan, 63517 Rodenbach (DE); KLEIN, Alexander, 55435 Gau-Algesheim (DE); HEEB, Heike, 63526 Erlensee (DE); KIZEWSKI, Ingrid, 63457 Hanau (DE); GRIMM, Sebastian, 63829 Krombach (DE); FLITTNER, Michael, 63776 Mömbris (DE)
(86) Internationale Anmeldenummer: PCT/EP2012/062790
(87) Internationale Veröffentlichungsnummer: WO 2013/017350

(56) Entgegenhaltungen:
- DE-A1-102006 039 849

## Beschreibung

### Gebiet der Erfindung

Die vorliegende Erfindung betrifft ein neuartiges (meth)acrylisches Reaktionsharz, das geruchsarm bzw. geruchsfrei aushärtet. Insbesondere betrifft die vorliegende Erfindung Reaktionsharze, enthaltend hochsiedende, reaktive (meth)acrylische Monomere aus der Gruppe der polaren cyclisch substituierten Ester der (Meth)acrylsäure, insbesondere von Glycerinacetal-, -ketal- oder -carbonatmethacrylaten. Diese neuen Komponenten werden als Ersatz für MMA, welches den Hauptteil der Geruchsbelästigung in den bestehenden Reaktionsharzsystemen nach Stand der Technik darstellt, verwendet. Mittels dieser neuen Komponenten können Harzformulierungen gewonnen werden, die ähnliche Glasübergangstemperaturen und vergleichbare Eigenschaften wie MMA-basierte Harze aufweisen. Die neuartigen Reaktionsharze können darüber hinaus eine schnellere Aushärtung aufweisen als MMA-basierte Systeme des Standes der Technik. Unter Reaktionsharzen werden erfindungsgemäß reaktive Monomermischungen oder Mischungen aus Monomeren und Polymeren verstanden, die, als 2K-System verwendet, leicht ausgehärtet werden können.

### Stand der Technik

Die Verminderung des volatilen Bestandteils eines Reaktionsharzes, wie es als Beschichtungsmittel, Gießharz, zur Fahrbahnmarkierung oder als Bodenbeschichtung verwendet wird, und damit der bei der Applikation desselben gebildeten Geruchsbelästigung ist schon längere Zeit Ziel der Entwicklung. Als Reaktionsharze werden zurzeit Systeme basierend auf reaktiven Monomermischungen oder auf einer Mischung aus Polymeren und Monomeren, zumeist auf (Meth)acrylatbasis, eingesetzt. Bei den Monomeren handelt es sich dabei in der Regel um eine Mischung aus bi- oder trifunktionellen Vernetzern und Standardkomponenten wie MMA. (Meth)acrylate, insbesondere Acrylate oder Methacrylate mit kleinen Alkylresten sind Monomere, die einen hohen Dampfdruck besitzen und daher Ihr Geruch leicht wahrgenommen wird. Bei der Handhabung von Acrylaten müssen entsprechende MAK-Werte eingehalten werden. Solche Reaktionsharze sind beispielsweise in der EP 0 973 835 beschrieben.

In DE 1 769 792 findet sich ein Reaktionsharz mit einem MMA-Anteil zwischen 30 und 70 Gew%. In der DE 19 826 412 ist ein kalthärtendes (Meth)acrylatreaktionsharz beschrieben, das aufgrund eines höheren Anteils Vinylaromaten oder Vinylester geruchsvermindert ist. Jedoch zeigt auch ein solches Reaktionsharz noch einen störenden Geruch und eine gegenüber etablierten Systemen verminderte Langzeithaftung. In der EP 2 054 453 sind Reaktionsharze beschrieben, die neben 30 bis 50 Gew% MMA bis zu 15 Gew% Urethan(meth)acrylate enthalten. Auch solche Systeme weisen während des Applizierens einen relevanten Restgeruch auf.

Eine Alternative zu reinen (Meth)acrylatsystemen sind Reaktionsharze, die die Verwendung ungesättigter Polyester, wie beispielsweise in EP 0 871 678 beschrieben, enthalten. In EP 0 871 676 ist die Übertragung der gleichen ungesättigten bicyclischen Gruppen mit einem zusätzlich leicht zu abstrahierenden Proton von den Polyestern auf andere Polymere wie Polyolefine oder auch Polymethacrylate beschrieben. Jedoch auch diese Systeme weisen überwiegend sehr volatile Monomerbestandteile auf.

In WO 98/40424 werden 2- und 3-Komponenten-Formulierungen auf Basis ungesättigter Polyester in ungesättigten ethylenischen Verbindungen oder auf Basis von Methacrylpolymere in Methacrylmonomeren beschrieben. Auch für diese Systeme gelten die gleichen nachteiligen Eigenschaften bezüglich der Geruchsbildung.

### Aufgabe

Aufgabe der vorliegenden Erfindung ist die Bereitstellung eines Reaktionsharzes, welches bei der Applikation eine gegenüber dem Stand der Technik deutlich verminderte Geruchsbildung aufweist. Insbesondere war es Aufgabe der vorliegenden Erfindung ein Reaktionsharzsystem zur Verfügung zu stellen, welches auch in Hinsicht auf toxikologische und ökologische Aspekte eine Verbesserung gegenüber dem Stand der Technik darstellt.

Es besteht darüber hinaus die Aufgabe, 2-K-Systeme auf Basis der erfindungsgemäßen Reaktionsharze zur Anwendung z.B. als Fahrbahnmarkierung oder Bodenbeschichtung zur Verfügung zu stellen, das breit einsetzbar, flexibel formulierbar und relativ lange lagerstabil sein soll.

Eine besondere Aufgabe besteht darin, ein Reaktionsharz zur Verfügung zu stellen, das gegenüber dem Stand der Technik mindestens genauso langlebige Fahrbahnmarkierungen mit guten Retroreflektionseigenschaften, guter Tages- und Nachtsichtbarkeit, einem hohen, stabilen Weissgrad und einer guten Griffigkeit, auch bei nasser Fahrbahn bzw. langlebige Bodenbeschichtungen mit guten Oberflächeneigenschaten, Kohäsion und Adhäsion zum Untergrund, ermöglicht.

Weitere nicht explizit genannte Aufgaben ergeben sich aus dem Gesamtzusammenhang der nachfolgenden Beschreibung, Ansprüche und Beispiele.

### Lösung

Die Aufgaben werden gelöst durch die Bereitstellung eines neuartigen Reaktionsharzes, genauer durch Bereitstellung eines Reaktionsharzes auf (Meth)acrylatbasis enthaltend Monomere mit zyklischen Resten, die mindestens 2 Sauerstoffatome aufweisen.

Das erfindungsgemäße Reaktionsharz weist folgende Inhaltsstoffe auf:
a) 0,5 Gew% bis 30 Gew% Vernetzer, bevorzugt Dimethacrylate,
b) 5 Gew% bis 99,5 Gew%, bevorzugt bis 96 Gew% eines Esters der (Meth)acrylsäure mit einem Alkohol, der einen zyklischen Rest, mindestens zwei Sauerstoffatome enthaltend, aufweist,
c) 0 Gew%, bevorzugt 3,5 Gew% bis 90 Gew% weitere (Meth)acrylate und/oder mit (Meth)acrylaten copolymerisierbare Komponenten,
d) 0 Gew% bis 5 Gew% entweder Beschleuniger oder Initiator und gegebenenfalls weitere Hilfsstoffe.

Bei Komponente a), den Vernetzern, handelt es sich insbesondere um mehrfunktionelle (Meth)acrylate wie Allyl(meth)acrylat. Besonders bevorzugt sind di- oder tri-(Meth)acrylate wie beispielsweise 1,4-Butandioldi(meth)acrylat, Tetraethylenglycoldi(meth)acrylat, Triethylenglycoldi(meth)acrylat oder Trimethylolpropantri(meth)acrylat. Der Vernetzeranteil liegt insbesondere bevorzugt zwischen 2 Gew% und 20 Gew% und ganz besonders bevorzugt zwischen 3 Gew% und 15 Gew%.

Bei Komponente b) handelt es sich insbesondere um einen Ester der (Meth)acrylsäure mit einem Acetal, Ketal oder Carbonat von Glycerin, substituiertem Glycerin oder Trimethylolpropan bzw. substituierten Trimethylolpropan. Insbesondere handelt es sich bei Komponente b) um Monomere der allgemeinen Strukturformeln (1) oder (2):

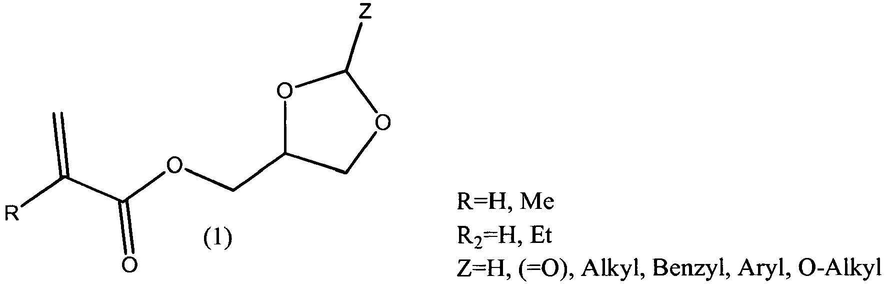

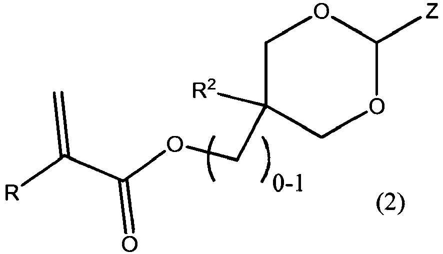

Besonders bevorzugt handelt es sich bei Komponente b) um Glycerinformal(meth)acrylat, Trimethylolpropan-formal-(meth)acrylat oder Isopropylidenglycerin(meth)acrylat (Solketal-methacrylat).

Zusätzlich kann das Reaktionsharz in einer besonders für Straßenmarkierungen geeigneten Zusammensetzung 1 Gew% bis 60 Gew% einer Komponente e), bei der es sich um ein oder mehrere Präpolymere, bevorzugt um Poly(meth)acrylate oder Polyester, handelt, enthalten.

Bei den in dem Reaktionsharz enthaltenen weiteren Monomeren der Komponente c) handelt es sich insbesondere um Verbindungen, die ausgewählt sind aus der Gruppe der (Meth)acrylate. wie beispielsweise Methyl(meth)acrylat, Ethyl(meth)acrylat, n-Butyl(meth)acrylat, 2-Ethylhexyl(meth)acrylat, Hydroxyethyl(meth)acrylat, Stearyl-(meth)acrylat, Benzyl(meth)acrylat oder Lauryl(meth)acrylat. Dabei können in Komponente c) auch mit (Meth)acrylaten mischbare Monomere wie Itaconsäure, Methacrylamide, 1-Alkene oder Styrole enthalten sein. Bevorzugt enthält das Reaktionsharz maximal 10 Gew%, bevorzugt maximal 5 Gew% und besonders bevorzugt maximal 2 Gew% (Meth)acrylate mit Resten zwischen 1 und 6 Kohlenstoffatomen.

Darüber hinaus können auch makromolekulare Monomere wie Mono(meth)acrylate von Polyethern, wie z.B. Polyethylenglycolen oder Polypropylenglycolen verwendet werden. Alternative makromolekulare Monomere als Komponente c) stellen Urethan(meth)acrylate dar. Unter diesen versteht man im Rahmen dieser Erfindung Verbindungen, die (Meth)acrylat-Funktionalitäten aufweisen, die über Urethangruppen miteinander verknüpft sind. Sie sind z.B. durch die Umsetzung von Hydroxyalkyl(meth)acrylaten mit Polyisocyanaten und Polyoxyalkylenen, die mindestens zwei Hydroxyfunktionalitäten aufweisen, erhältlich. Ein kommerziell erhältliches Beispiel hergestellt aus Polyolen, Isocyanaten und hydroxyfunktionellen Methacrylaten ist EBECRYL 210-5129 der Fa. UCB Chemicals. Ein erfindungsgemäßes Reaktionsharz kann zwischen 5 Gew% und 30 Gew% der beschriebenen Urethan(meth)acrylate enthalten.

Im Einzelnen wird Komponente c) nach Anteil und Zusammensetzung zweckmäßigerweise im Hinblick auf die gewünschte technische Funktion gewählt werden.

Der Monomeranteil des Reaktionsharzes liegt insbesondere zwischen 10 Gew% und 85 Gew% für ausschließlich aus Monomeren bestehende Systeme, und bevorzugt zwischen 10 Gew% und 60 Gew% für so genannte MO-PO-Systeme wie sie im folgenden beschrieben werden.

In einer alternativen, insbesondere als Straßenmarkierung oder Fußbodenbeschichtung besonders gut geeigneten Ausführungsform enthält das Reaktionsharz zusätzlich Komponente e). In diesen sogenannten MO-PO-Systemen (Monomer-Polymer-Systemen) liegen somit neben den aufgeführten Monomeren auch Polymere, zur besseren Unterscheidbarkeit im Rahmen dieses Schutzrechtes als Präpolymer bezeichnet, bevorzugt Polyester oder Poly(meth)acrylate vor. Die Präpolymere werden zur Verbesserung der Polymerisationseigenschaften, der mechanischen Eigenschaften, der Haftung zum Untergrund sowie der optischen Anforderungen an die Harze eingesetzt. Der Präpolymeranteil des Reaktionsharzes in dieser Ausführungsform liegt dabei zwischen 10 Gew% und 60 Gew%, bevorzugt zwischen 15 Gew% und 40 Gew%. Sowohl die Polyester als auch die Poly(meth)acrylate können zusätzliche funktionelle Gruppen zur Haftvermittlung oder zur Copolymerisation in der Vernetzungsreaktion, wie beispielsweise in Form von Doppelbindungen, aufweisen. Bevorzugt, in Hinblick auf eine bessere Farbstabilität der Fahrbahnmarkierung, weisen die Präpolymere jedoch keine Doppelbindungen auf.

Besagte Poly(meth)acrylate sind im Allgemeinen aus den gleichen Monomeren zusammengesetzt, wie sie bereits bezüglich der Monomere im Harzsystem aufgelistet wurden. Sie können durch Lösungs-, Emulsions-, Suspensions-, Substanz- oder Fällungspolymerisation gewonnen werden und werden dem System als Reinstoff zugesetzt.

Besagte Polyester werden in Substanz via Polykondensation oder ringöffnende Polymerisation gewonnen und setzen sich aus den für diese Anwendungen bekannten Bausteinen zusammen.

Auf Basis dieser erfindungsgemäßen Reaktionsharze werden Formulierungen, die eine von optional zwei bis drei Komponenten einer gleichfalls erfindungsgemäßen Kaltplastik ausmachen, hergestellt. Dabei gibt es zwei bevorzugte Ausführungsformen. Bei der ersten handelt es sich um ein reines Monomersystem. Diese Formulierungen enthalten erfindungsgemäß folgende Komponenten:
5 Gew% bis 99 Gew% des erfindungsgemäßen Reaktionsharzes, enthaltend mindestens 0,1 Gew% ein oder mehrerer Beschleuniger oder Initiatoren d) und
0,1 Gew% bis 5 Gew% einer Mischung, enthaltend ein oder mehrere Beschleuniger oder Initiatoren f), wobei es sich bei Komponente d) um einen Initiator und gleichzeitig bei Komponente f) um einen Beschleuniger handelt oder alternativ bei Komponente d) um einen Beschleuniger und bei Komponente f) um einen Initiator handelt.

In der zweiten Ausführungsform, bei der es sich um ein MO-PO-System handelt, weist die Kaltplastik folgende Komponenten auf:
9 Gew% bis 45 Gew% des erfindungsgemäßen Reaktionsharzes, bevorzugt, enthaltend mindestens 0,1 Gew% ein oder mehrere Beschleuniger oder Initiatoren d),
0,1 Gew% bis 5 Gew% einer Mischung, enthaltend ein oder mehrere Initiatoren oder Beschleuniger f),
0 Gew% bis 15 Gew% eines anorganischen Pigments, bevorzugt Titandioxid und
10 Gew% bis 90 Gew% Glasperlen, organische oder weitere mineralische Füllstoffe, wobei es sich bei Komponente d) um einen Initiator und gleichzeitig bei Komponente f) um einen Beschleuniger handelt oder alternativ bei Komponente d) um einen Beschleuniger und bei Komponente f) um einen Initiator handelt.

In beiden Ausführungsformen sind Initiatoren und Beschleuniger vordem Mischen getrennt in unterschiedlichen Komponenten der Kaltplastik.

In Varianten beider Ausführungsformen werden zwei erfindungsgemäße Reaktionsharze in einem Gewichtsverhältnis zwischen 1 zu 1 und 4 zu 1 miteinander vermischt, wobei ein Reaktionsharz die Komponente d) und das andere Reaktionsharz die Komponente f) enthält.

Als Initiatoren d) bzw. f) - genauer Polymerisationsinitiatoren - dienen Peroxide. Unter Umständen kann es vorteilhaft sein, ein Gemisch verschiedener Initiatoren einzusetzen. Vorzugsweise finden Peroxide wie Dilauroylperoxid, Dibenzoylperoxid, tert.-Butylperoctoat, Di(tert-butyl)peroxid (DTBP), Di(tert-amyl)peroxid (DTAP), tert-Butylperoxy-(2-ethylhexyl)carbonat (TBPEHC) und weitere bei hoher Temperatur zerfallende Peroxide als Radikalinitiator Verwendung. Für Reaktionsharze zur Anwendung zum Beispiel für Fahrbahnmarkierungen sind besonders bevorzugt Dilauroylperoxid oder Dibenzoylperoxid. In der Regel ist das Peroxid in der zweiten Komponente mit einem Verdünnungsmittel, beispielsweise mit einem Phthalat wie Dibutylphthalat, einem Öl oder einem anderen Weichmacher versetzt. Die erfindungsgemäße Kaltplastik als Summe der ersten und der zweiten, sowie optional der dritten Komponente enthält zwischen 0,1 Gew% und 7 Gew%, bevorzugt zwischen 0,5 Gew% und 6 Gew% und ganz besonders bevorzugt zwischen 1 Gew% und 5 Gew% des Initiators bzw. der Mischung aus dem Initiator und dem Verdünnungsmittel.

Eine besondere Ausführungsform eines Redox-Starter-Systems für Reaktionsharze ist die Kombination aus Peroxiden und Beschleunigern g), insbesondere Aminen. Als besagte Amine seien zum Beispiel tertiäre aromatisch substituierte Amine, wie insbesondere N,N-Dimethyl-p-toluidin, N,N-bis-(2-Hydroxyethyl)-p-toluidin oder N,N-bis-(2-Hydroxypropyl)-p-toluidin genannt. Das erfindungsgemäße Reaktionsharz kann bis zu 7 Gew%, bevorzugt bis zu 5 Gew% und ganz besonders bevorzugt bis zu 3 Gew% eines Beschleunigers enthalten.

In einer alternativen Ausführungsform eines 3-K-Systems, insbesondere geeignet für Fahrbahnmarkierungen, ist der Beschleuniger in der zweiten Komponente, zum Beispiel in einem Verdünnungsmittel enthalten und der Initiator, z.B. das Peroxid ist Bestandteil des erfindungsgemäßen Reaktionsharzes. Bei der dritten Komponente handelt es sich beispielsweise um Glaskugeln und eventuell benötigte Haftvermittler. Alternativ ist der Beschleuniger Bestandteil des Reaktionsharzes und der oder die Initiatoren sind Bestendteil einer zweiten bzw. Dritten Komponente des Reaktionsharzes.

Die Komponenten der beschriebenen Kaltplastiken können vor oder während dem Applizieren gemischt werden.

Darüber hinaus können weitere Hilfsstoffe wie Stabilisatoren, z.B. UV-Stabilisatoren, Inhibitoren, Regler oder Wachse enthalten sein. Weiterhin können die einzelnen Komponenten weitere Hilfsstoffe wie Entschäumer, Rheologieadditive, Verlaufshilfsmittel, Netz- und/oder Dispergiermittel, einen griffigen (rutschfesten) Füllstoff und Antiabsetzmittel enthalten. Auch können - insbesondere für Fahrbahnmarkierungen Glaskugeln, die zur Verbesserung der Reflexion zugesetzt werden, in einer der Komponenten der Kaltplastik enthalten sein oder bei der Applikation zusätzlich aufgestreut werden.

Zusätzlich können den Formulierungen, je nach Verwendung, Farbstoffe, Fein- und/oder Grobfüllstoffe zugesetzt werden.

Für das Einsatzgebiet der Formulierungen als Farbahnmarkierung oder Flächenmarkierung werden als Hilfs- und Zusatzstoffe vorzugsweise Farbstoffe zugegeben. Besonders bevorzugt sind weiße, rote, blaue, grüne und gelbe anorganische Pigmente, besonders bevorzugt sind weiße Pigmente wie Titandioxid.

Feinfüllstoffe werden aus der Gruppe der Calciumcarbonate, Bariumsulfate, Quarze, Quarzmehle, gefällten und pyrogenen Kieselsäuren, Pigmente und Cristobalite eingesetzt. Als Grobfüllstoffe werden Quarze, Cristobalite, Korunde und Aluminiumsilikate eingesetzt.

Als Hilfs- und Zusatzstoffe können zusätzlich Regler, Weichmacher, Paraffine, Stabilisatoren, Inhibitoren, Wachse und/oder Öle eingesetzt werden.

Die Paraffine werden zugesetzt, um eine Inhibierung der Polymerisation durch den Sauerstoff der Luft zu verhindern. Dazu können mehrere Paraffine mit unterschiedlichen Schmelzpunkten in unterschiedlichen Konzentrationen verwendet werden.

Als Regler können alle aus der radikalischen Polymerisation bekannten Verbindungen verwendet werden. Bevorzugt werden Mercaptane wie n-Dodecylmercaptan, aber auch mehrwertige Mercaptoverbindungen wie Pentaerythroltetrathioglycolat eingesetzt.

Als Weichmacher werden vorzugsweise Ester, Polyole, Öle, niedermolekulare Polyether oder Phthalate eingesetzt.

Ebenso können herkömmliche UV-Stabilisatoren eingesetzt werden. Vorzugsweise werden die UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate.

Aus der Gruppe der Stabilisatoren bzw. Inhibitoren werden vorzugsweise substituierte Phenole, Hydrochinonderivate, Phosphine und Phosphite eingesetzt.

Folgende Komponenten können optional auch in Formulierungen zur Fahrbahnmarkierung enthalten sein:
Netz-, Dispergier- und Verlaufshilfsmittel werden vorzugsweise ausgewählt aus der Gruppe der Alkohole, Kohlenwasserstoffe, Glycolderivate, Derivate von Glycolsäureestern, Essigsäureestern und Polysiloxanen, Polyether, Polysiloxane, Polycarbonsäuren, gesättigte und ungesättigte Polycarbonsäureaminamide eingesetzt.

Als Rheologieadditive werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter, optional auch silanisierter, Kieselsäuren mit einer BET-Oberfläche von 10-700 nm²/g besonders geeignet sind.

Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt.

Diese Formulierungsfreiheiten zeigen, dass das erfindungsgemäße Reaktionsharz bzw. die erfindungsgemäße Kaltplastik, das Reaktionsharz enthaltend, anwendungsspezifisch formulierbar und additivierbar ist.

Die erfindungsgemäßen Kaltplastiken können vielfach Verwendung finden. So sind entsprechende Kaltplastiken insbesondere zur Herstellung von Fahrbahnmarkierungen, Fahrbahnreparaturmassen, Intumeszenzbeschichtungen, oder Bodenbeschichtungen geeignet. Auch eine Verwendung zur Herstellung von Cobble Stones ist möglich.

Kaltplastiken ohne feste Formulierungsbestandteile wie Füllstoffe können z.B. auch als Bodenbeschichtung, Gießharz, Bautenschutz, Beschichtungs- oder Laminierungsmittel - z.B. für Orthopädieharze - sowie zur Herstellung von Prepregs verwendet werden. Auch eine Verwendung als Reaktivkleber ist möglich.

Überraschend wurde gefunden, dass die erfindungsgemäßen Reaktionsharze sowie die daraus hergestellten Kaltplastiken sich durch sehr gute Eigenschaften wie Langlebigkeit, mechanischen Eigenschaften, Abriebfestigkeit, u.U. Weißgrad oder Pigmentierung und Griffigkeit, die sämtlich mindestens so gut wie bei Systemen des Standes der Technik sind, auszeichnen. Darüber hinaus zeichnen sich die erfindungsgemäßen Systeme jedoch gegenüber dem Stand der Technik durch eine besonders geringe Geruchsbildung bzw. Freisetzung volatiler Bestandteile aus. Die Coformulierung der Komponente b) ermöglicht es, bei der Wahl weiterer Monomere insbesondere auf stark geruchsbildende Monomere wie Ethylacrylat gänzlich zu verzichten, ohne die restlichen Eigenschaften der Kaltplastik zu verschlechtern.

Auch kann das System bezüglich der Applikationen, mittels Wahl geeigneter Monomere, Präpolymere, Additive und/oder Haftvermittler, optimiert werden. Die erfindungsgemäßen Systeme sind entsprechend variabel optimierbar für verschiedenste Anwendungen einsetzbar. So ist für Straßenmarkierungen z.B. die Markierung von Asphalt-, Beton- oder Natursteinoberflächen durchaus möglich.

Auch bezüglich der Applikationstechnologie sind die erfindungsgemäßen Systeme flexibel einsetzbar. Die erfindungsgemäßen Reaktionsharze, bzw. Kaltplastiken können sowohl im Spritz-, Guss- oder im Extrusionsverfahren appliziert werden.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

### Verwendete Materialien:

Als Polymerkomponenten wurden Degalan LP 64/12 und Degalan LP 66/02 (beide Fa. Evonik Röhm) verwendet. Hierbei handelt es sich um Suspensionspolymerisate die Methylmethacrylat und n-Butylmethacrylat in verschiedenen Verhältnissen enthalten und gewichtsmittlere Molmassen M_{w} zwischen 30 000 und 90 000 g/mol aufweisen (ermittelt durch SEC gegen PMMA Standards).

Zur Ermittlung der Topfzeit wurde diejenige Zeit ermittelt, die das Material nach Einrühren des Härters benötigt um sich selbst von Raumtemperatur (20-22 °C) auf 32 °C zu erwärmen.

Die Viskositäten der Reaktionsharzmischungen wurden per Brookfield DV2, Messkörper 2, mit 12 Umdrehungen pro Minute gemessen.

Zur Ermittlung der tₘₐₓ wurde diejenige Zeit verwendet, die 20 g Harz in einem PE-Becher mit 45 mm Durchmesser benötigen um das Temperaturmaximum (Tₘₐₓ) während der Aushärtung zu erreichen.

Zur Ermittlung der VOC-Werte wurde eine gravimetrische Messung in Übereinstimmung mit der ASTM D2369-10, Method E, durchgeführt.

### Beispiel 1

Zu 94 Gewichtsteilen Glycerinformalmethacrylat, 1 Gewichtsteilen 1,4-Butandioldimethacrylat werden 0,06 Gewichtsteile Topanol-O, 0,5 Gewichtsteile Sasolwax 5603 und 1,5 Gewichtsteile N,N-Di-2-hydroxypropyl-*p*-toluidin gegeben und unter starkem Rühren bei 63°C so lange gemischt, bis alle Bestandteile gelöst sind. Das Harz wird anschließend unter Rühren auf 23°C abkühlen lassen. Zur Aushärtung wird dem Harz 2 Gewichtsprozent Härterpulver (50% BPO in Dicyclohexylphthalat) beigemischt, für eine Minute gerührt und dann in ca. 2mm Schichtdicke auf eine Metalloberfläche aufgetragen.

### Beispiel 2

Zu 94 Gewichtsteilen Isopropylidenglycerinmethacrylat, 1 Gewichtsteilen Triethylenglycoldimethacrylat werden 0,06 Gewichtsteile Topanol-O, 0,5 Gewichtsteile Sasolwax 5603 und 1,5 Gewichtsteile N,N-Di-2-hydroxypropyl-p-toluidin gegeben und unter starkem Rühren bei 63°C so lange gemischt, bis alle Bestandteile gelöst sind. Das Harz wird anschließend unter Rühren auf 23°C abkühlen lassen. Zur Aushärtung wird dem Harz 2 Gewichtsprozent Härterpulver (50% BPO in Dicyclohexylphthalat) beigemischt, für eine Minute gerührt und dann in ca. 2mm Schichtdicke auf eine Metalloberfläche aufgetragen.

### Beispiel 3

Zu 84 Gewichtsteilen Glycerinformalmethacrylat, 9 Teilen Glycerinformalacrylat, und 5 Gewichtsteilen 1,4-Butandioldimethacrylat werden 0,06 Gewichtsteile Topanol-O, 0,6 Gewichtsteile Sasolwax 5603 und 1,5 Gewichtsteile N,N-Di-2-hydroxypropyl-p-toluidin gegeben und unter starkem Rühren bei 63°C so lange gemischt, bis alle Bestandteile gelöst sind. Das Harz wird anschließend unter Rühren auf 23°C abkühlen lassen. Zur Aushärtung wird dem Harz 2 Gewichtsprozent Härterpulver (50% BPO in Dicyclohexylphthalat) beigemischt, für eine Minute gerührt und dann in ca. 2mm Schichtdicke auf eine Metalloberfläche aufgetragen.

### Beispiel 4

Zu 56 Gewichtsteilen Glycerinformalmethacrylat, 37 Teilen Glycerinformalacrylat, und 5 Gewichtsteilen 1,4-Butandioldimethacrylat werden 0,06 Gewichtsteile Topanol-O, 0,6 Gewichtsteile Sasolwax 5603 und 1,5 Gewichtsteile N,N-Di-2-hydroxypropyl-p-toluidin gegeben und unter starkem Rühren bei 63°C so lange gemischt, bis alle Bestandteile gelöst sind. Das Harz wird anschließend unter Rühren auf 23°C abkühlen lassen. Zur Aushärtung wird dem Harz 2 Gewichtsprozent Härterpulver (50% BPO in Dicyclohexylphthalat) beigemischt, für eine Minute gerührt und dann in ca. 2mm Schichtdicke auf eine Metalloberfläche aufgetragen.

### Beispiel 5

Zu 56 Gewichtsteilen Glycerinformalacrylat, 37 Teilen Glycerinformalmethacrylat, und 5 Gewichtsteilen 1,4-Butandioldimethacrylat werden 0,06 Gewichtsteile Topanol-O, 0,6 Gewichtsteile Sasolwax 5603 und 1,5 Gewichtsteile N,N-Di-2-hydroxypropyl-p-toluidin gegeben und unter starkem Rühren bei 63°C so lange gemischt, bis alle Bestandteile gelöst sind. Das Harz wird anschließend unter Rühren auf 23°C abkühlen lassen. Zur Aushärtung wird dem Harz 2 Gewichtsprozent Härterpulver (50% BPO in Dicyclohexylphthalat) beigemischt, für eine Minute gerührt und dann in ca. 2mm Schichtdicke auf eine Metalloberfläche aufgetragen.

### Beispiel 6

Zu 84 Gewichtsteilen Glycerinformalacrylat, 9 Teilen Glycerinformalmethacrylat, und 5 Gewichtsteilen 1,4-Butandioldimethacrylat werden 0,06 Gewichtsteile Topanol-O, 19, 0,6 Gewichtsteile Sasolwax 5603 und 1,5 Gewichtsteile N,N-Di-2-hydroxypropyl-*p*-toluidin gegeben und unter starkem Rühren bei 63°C so lange gemischt, bis alle Bestandteile gelöst sind. Das Harz wird anschließend unter Rühren auf 23°C abkühlen lassen. Zur Aushärtung wird dem Harz 2 Gewichtsprozent Härterpulver (50% BPO in Dicyclohexylphthalat) beigemischt, für eine Minute gerührt und dann in ca. 2mm Schichtdicke auf eine Metalloberfläche aufgetragen.

**Tabelle 1: Aushärteverhalten von Kaltplastiken ohne Präprolymere, in verschiedenen Mischungen der Comonomere zur Verdeutlichung der Einstellbarkeit der Härte des gehärteten Materials:**

| Beispiel | Topfzeit [min] | Tmax [°C] | tmax [min] | Oberfläche klebfrei | ShoreD |
|---|---|---|---|---|---|
| 3 | 4 | 166,0 | 6,00 | Ja | 76 |
| 4 | 3 | 185,0 | 4,50 | Ja | 71 |
| 5 | 3,25 | 189,0 | 4,75 | Ja | 33 |
| 6 | 3 | 194,0 | 4,25 | Ja | 16 |

### Beispiel 7

Zu 34 Gewichtsteilen Isopropylidenglycerinmethacrylat, 19 Teilen 2-Ethylhexylacrylat, 9 Gewichtsteilen Hydroxypropylmethacrylat, und 8,5 Gewichtsteilen Triethylenglycoldimethacrylat werden 0,06 Gewichtsteile Topanol-O, 19 Gewichtsteile Degalan LP 66/02, 7 Gewichtsteile Degalan LP 64/12,, 0,9 Gewichtsteile Sasolwax 5603 und 1,5 Gewichtsteile N,N-Di-2-hydroxypropyl-*p*-toluidin gegeben und unter starkem Rühren bei 63°C so lange gemischt, bis alle Bestandteile gelöst sind. Das Harz wird anschließend unter Rühren auf 23°C abkühlen lassen. Zur Aushärtung wird dem Harz 2 Gewichtsprozent Härterpulver (50% BPO in Dicyclohexylphthalat) beigemischt, für eine Minute gerührt und dann in ca. 2mm Schichtdicke auf eine Metalloberfläche aufgetragen.

### Beispiel 8

Zu 34 Gewichtsteilen Glycerinformalacrylat, 35 Teilen n-Butylacrylat 2 Gewichtsteilen 1,4-Butandioldimethacrylat werden 0,06 Gewichtsteile Topanol-O, 25 Gewichtsteile Degalan LP 66/02, 0,5 Gewichtsteile Sasolwax 5603, 1,5 Gewichtsteile N,N-Di-2-hydroxypropyl-p-toluidin und 0,4 Gewichtsteile N,N-Dimethyl-*p*-toluidin gegeben und unter starkem Rühren bei 63°C so lange gemischt, bis alle Bestandteile gelöst sind. Das Harz wird anschließend unter Rühren auf 23°C abkühlen lassen. Zur Aushärtung wird dem Harz 2 Gewichtsprozent Härterpulver (50% BPO in Dicyclohexylphthalat) beigemischt, für eine Minute gerührt und dann in ca. 2mm Schichtdicke auf eine Metalloberfläche aufgetragen.

### Beispiel 9

Zu 37 Gewichtsteilen Glycerinformalmethacrylat, 37 Teilen 2-Ethylhexylacrylat und 2 Gewichtsteilen Triethylenglycoldimethacrylat werden 0,07 Gewichtsteile Topanol-O, 20 Gewichtsteile Degalan LP 64/12, 1,5 Gewichtsteile Sasolwax 5603, 0,7 Gewichtsteile N,N-Di-2-hydroxypropyl-*p*-toluidin und 0,3 Gewichtsteile N,N-Dimethyl-p-toluidin gegeben und unter starkem Rühren bei 63°C so lange gemischt, bis alle Bestandteile gelöst sind. Das Harz wird anschließend unter Rühren auf 23°C abkühlen lassen. Zur Aushärtung wird dem Harz 2 Gewichtsprozent Härterpulver (50% BPO in Dicyclohexylphthalat) beigemischt, für eine Minute gerührt und dann in ca. 2mm Schichtdicke auf eine Metalloberfläche aufgetragen.

### Beispiel 10

Zu 35 Gewichtsteilen Glycerinformalmethacrylat, 39 Teilen 2-Ethylhexylmethacrylat und 2,5 Gewichtsteilen Triethylenglycoldimethacrylat werden 0,07 Gewichtsteile Topanol-O, 20 Gewichtsteile Degalan LP 64/12, 1,5 Gewichtsteile Sasolwax 5603, 0,7 Gewichtsteile N,N-Di-2-hydroxypropyl-*p*-toluidin und 0,8 Gewichtsteile N,N-Dimethyl-p-toluidin gegeben und unter starkem Rühren bei 63°C so lange gemischt, bis alle Bestandteile gelöst sind. Das Harz wird anschließend unter Rühren auf 23°C abkühlen lassen. Zur Aushärtung wird dem Harz 2 Gewichtsprozent Härterpulver (50% BPO in Dicyclohexylphthalat) beigemischt, für eine Minute gerührt und dann in ca. 2mm Schichtdicke auf eine Metalloberfläche aufgetragen.

### Beispiel 11

Zu 37 Gewichtsteilen Glycerinformalmethacrylat, 33 Teilen 2-Ethylhexylacrylat, 5 Teilen 2-Hydroxyethylmethacrylat und 2 Gewichtsteilen Triethylenglycoldimethacrylat werden 0,07 Gewichtsteile Topanol-O, 17 Gewichtsteile Degalan LP 66/02, 3 Gewichtsteile Degalan LP 64/12, 1,4 Gewichtsteile Sasolwax 5603, 0,7 Gewichtsteile N,N-Di-2-hydroxypropyl-*p*-toluidin und 0,3 Gewichtsteile N,N-Dimethyl-*p*-toluidin gegeben und unter starkem Rühren bei 63°C so lange gemischt, bis alle Bestandteile gelöst sind. Das Harz wird anschließend unter Rühren auf 23°C abkühlen lassen. Zur Aushärtung wird dem Harz 2 Gewichtsprozent Härterpulver (50% BPO in Dicyclohexylphthalat) beigemischt, für eine Minute gerührt und dann in ca. 2mm Schichtdicke auf eine Metalloberfläche aufgetragen.

### Beispiel 12

Zu 37 Gewichtsteilen Glycerinformalmethacrylat, 33 Teilen 2-Ethylhexylacrylat, 5 Teilen 2-Hydroxypropylmethacrylat und 2 Gewichtsteilen Triethylenglycoldimethacrylat werden 0,07 Gewichtsteile Topanol-O, 17 Gewichtsteile Degalan LP 66/02, 3 Gewichtsteile Degalan LP 64/12, 1,4 Gewichtsteile Sasolwax 5603, 0,7 Gewichtsteile N,N-Di-2-hydroxypropyl-*p*-toluidin und 0,3 Gewichtsteile N,N-Dimethyl-p-toluidin gegeben und unter starkem Rühren bei 63°C so lange gemischt, bis alle Bestandteile gelöst sind. Das Harz wird anschließend unter Rühren auf 23°C abkühlen lassen. Zur Aushärtung wird dem Harz 2 Gewichtsprozent Härterpulver (50% BPO in Dicyclohexylphthalat) beigemischt, für eine Minute gerührt und dann in ca. 2mm Schichtdicke auf eine Metalloberfläche aufgetragen.

### Beispiel 13

Zu 43 Gewichtsteilen Glycerinformalmethacrylat, 33 Teilen 2-Ethylhexylacrylat, 5 Teilen 2-Hydroxypropylmethacrylat und 2 Gewichtsteilen Triethylenglycoldimethacrylat werden 0,07 Gewichtsteile Topanol-O, 17 Gewichtsteile Degalan LP 66/02, 3 Gewichtsteile Degalan LP 64/12, 1,5 Gewichtsteile Sasolwax 5603, 0,7 Gewichtsteile N,N-Di-2-hydroxypropyl-*p*-toluidin und 0,3 Gewichtsteile N,N-Dimethyl-p-toluidin gegeben und unter starkem Rühren bei 63°C so lange gemischt, bis alle Bestandteile gelöst sind. Das Harz wird anschließend unter Rühren auf 23°C abkühlen lassen. Zur Aushärtung wird dem Harz 2 Gewichtsprozent Härterpulver (50% BPO in Dicyclohexylphthalat) beigemischt, für eine Minute gerührt und dann in ca. 2mm Schichtdicke auf eine Metalloberfläche aufgetragen.

### Beispiel 14

Zu 38 Gewichtsteilen Glycerinformalmethacrylat, 33 Teilen 2-Ethylhexylacrylat, 5 Teilen 2-Hydroxypropylmethacrylat und 1 Gewichtsteil Triethylenglycoldimethacrylat werden 0,07 Gewichtsteile Topanol-O, 17 Gewichtsteile Degalan LP 66/02, 3 Gewichtsteile Degalan LP 64/12, 1,5 Gewichtsteile Sasolwax 5603, 0,3 Gewichtsteile N,N-Di-2-hydroxypropyl-*p*-toluidin und 0,2 Gewichtsteile N,N-Dimethyl-*p*-toluidin gegeben und unter starkem Rühren bei 63°C so lange gemischt, bis alle Bestandteile gelöst sind. Das Harz wird anschließend unter Rühren auf 23°C abkühlen lassen. Zur Aushärtung wird dem Harz 2 Gewichtsprozent Härterpulver (50% BPO in Dicyclohexylphthalat) beigemischt, für eine Minute gerührt und dann in ca. 2mm Schichtdicke auf eine Metalloberfläche aufgetragen.

**Tabelle 2: Kaltplastiken zur Demonstration der Einstellbarkeit der Reaktivität und der Viskosität der erfindungsgemäßen Reaktionsharze sowie der Klebfreiheit der ausgehärteten Harze mit verschiedenen Comonomeren.**

| Beispiel Nr. | Topfzeit (min) | t-max (min) | Tmax (°C) | Visk (mPas) | klebfrei |
|---|---|---|---|---|---|
| 1 | 5 | 8 | 150 | <10 | Ja |
| 2 | 9 | 13 | 104 | <10 | Ja |
| 8 | 6 | 6,5 | 109 | 150 | Ja |
| 9 | 11 | 15 | 96 | 170 | Ja |
| 10 | 5 | 7,7 | 101 | 185 | Ja |
| 11 | 13 | 19 | 94 | 250 | Ja |
| 12 | 12 | 15 | 98 | 270 | Ja |
| 13 | 13 | 10 | 117 | 220 | Ja |
| 14 | 17 | 12 | 131 | 210 | Ja |

### Beispiel 15

Das Reaktionsharz, welches aus Beispiel 9 erhalten wurde, wird mit 10 Gewichtsteile Titandioxid (TR 92), 54,6 Gewichtsteile Feinfüllstoff (Omyacarb 15 GU), 0,3 Gewichtsteile eines Dispergierhilfsmittels (TEGO® Dispers 670) und 0,1 Gewichtsteile Rheologieadditiv (Byk 410) unter Dispergieren zu einer Fahrbahnmarkierungsfarbe konfektioniert.

Dabei wird das Harz vorgelegt, ein Teil des Rheologieadditivs über einen Zeitraum von 5 Minuten eindispergiert, anschließend das Dispergierhilfsmittels ebenfalls über 5 Minuten, und darauf das Titandioxid und der Feinfüllstoff jeweils weitere 10 Minuten eindispergiert. Am Schluss wird die restliche Menge des Dispergierhilfsmittels eingearbeitet.

Zur Aushärtung wird dem konfektionierten Harz 2 Gewichtsprozent Härterpulver (50% BPO in Dicyclohexylphthalat) beigemischt, für eine Minute gerührt und dann in 1 mm Schichtdicke auf eine PET-Oberfläche aufgerakelt.

### Beispiel 16

Das Reaktionsharz, welches aus Beispiel 10 erhalten wurde, wird mit 10 Gewichtsteile Titandioxid (TR 92), 54,6 Gewichtsteile Feinfüllstoff (Omyacarb 15 GU), 0,3 Gewichtsteile eines Dispergierhilfsmittels (TEGO® Dispers 670) und 0,1 Gewichtsteile Rheologieadditiv (Byk 410) unter Dispergieren zu einer Fahrbahnmarkierungsfarbe konfektioniert.

Dabei wird das Harz vorgelegt, ein Teil des Rheologieadditivs über einen Zeitraum von 5 Minuten eindispergiert, anschließend das Dispergierhilfsmittels ebenfalls über 5 Minuten, und darauf das Titandioxid und der Feinfüllstoff jeweils weitere 10 Minuten eindispergiert. Am Schluss wird die restliche Menge des Dispergierhilfsmittels eingearbeitet.

Zur Aushärtung wird dem konfektionierten Harz 2 Gewichtsprozent Härterpulver (50% BPO in Dicyclohexylphthalat) beigemischt, für eine Minute gerührt und dann in 1 mm Schichtdicke auf eine PET-Oberfläche aufgerakelt.

### Vergleichsbeispiel 1

Zu 34 Gewichtsteilen Methylmethacrylat, 35 Teilen n-Butylacrylat und 1,6 Gewichtsteilen Triethylenglycoldimethacrylat werden 0,06 Gewichtsteile Topanol-O, 23 Gewichtsteile Degalan LP 66/02, 4 Gewichtsteile Degalan LP 64/12, 1,3 Gewichtsteile Sasolwax 5603, 0,6 Gewichtsteile N,N-Di-2-hydroxypropyl-*p*-toluidin und 0,3 Gewichtsteile N,N-Dimethyl-*p*-toluidin gegeben und unter starkem Rühren bei 63°C so lange gemischt, bis alle Bestandteile gelöst sind. Das Harz wird anschließend unter Rühren auf 23°C abkühlen lassen. Das so erhaltene Reaktionsharz wurde, wird mit 10 Gewichtsteile Titandioxid (TR 92), 54,6 Gewichtsteile Feinfüllstoff (Omyacarb 15 GU), 0,3 Gewichtsteile eines Dispergierhilfsmittels (TEGO® Dispers 670) und 0,1 Gewichtsteile Rheologieadditiv (Byk 410) unter Dispergieren zu einer Fahrbahnmarkierungsfarbe konfektioniert. Dabei wird das Harz vorgelegt, ein Teil des Rheologieadditivs über einen Zeitraum von 5 Minuten eindispergiert, anschließend das Dispergierhilfsmittels ebenfalls über 5 Minuten, und darauf das Titandioxid und der Feinfüllstoff jeweils weitere 10 Minuten eindispergiert. Am Schluss wird die restliche Menge des Dispergierhilfsmittels eingearbeitet.

Zur Aushärtung wird dem konfektionierten Harz 2 Gewichtsprozent Härterpulver (50% BPO in Dicyclohexylphthalat) beigemischt, für eine Minute gerührt und dann in 1 mm Schichtdicke auf eine PET-Oberfläche aufgerakelt.

**Tabelle 3: Vergleich einer klassischen Kaltplastik für Straßenmarkierungen mit Füllstoffen auf der Basis von MMA und anderen leicht flüchtigen Comonomeren mit erfindungsgemäßen Harzen sowie VOC-Werte:**

| | **Vergleichsbeispiel 1** | **Beispiel 15** | **Beispiel 16** |
|---|---|---|---|
| **Shore D nach 24h** | 40 | 44 | 42 |
| **Shore D nach 3d** | 44 | 45 | 42 |
| **Topfzeit [min]** | 10 | 2,5 | 4 |
| **Härtezeit [min]** | 30 | 25 | 35 |
| **VOC [Gew.-%]*** | 1,9 (Vergleichsbeispiel 2) | 1,0 | 0,9 |

| | | | |
|---|---|---|---|
| * Die VOC-Werte wurden mit den füllstofffreien Kaltplastiken durchgeführt. Im Einzelnen entspricht damit die Kaltplastik aus Beispiel 15 der Kaltplastik aus Beispiel 9 und die Kaltplatik aus Beispiel 16 der aus Beispiel 10. Vergleichsbeispiel 2 entspricht Vergleichsbeispiel 1 ohne Füllstoffe. | | | |

## Patentansprüche

1. Reaktionsharz auf (Meth)acrylatbasis, **dadurch gekennzeichnet,**
**dass** das Reaktionsharz folgende Inhaltsstoffe aufweist:
a) 0,5 Gew% bis 30 Gew% Vernetzer,
b) 5 Gew% bis 99,5 Gew% eines Esters der (Meth)acrylsäure mit einem Alkohol, der einen zyklischen Rest, mindestens zwei Sauerstoffatome enthaltend, aufweist,
c) 0 Gew% bis 90 Gew% weitere (Meth)acrylate und/oder mit (Meth)acrylaten copolymerisierbare Komponenten,
d) 0 Gew% bis 5 Gew% Beschleuniger oder Initiator und gegebenenfalls weitere Hilfsstoffe.

2. Reaktionsharz gemäß Anspruch 1, **dadurch gekennzeichnet,**
**dass** das Reaktionsharz folgende Inhaltsstoffe aufweist:
a) 0,5 Gew% bis 30 Gew% Dimethacrylate,
b) 5 Gew% bis 96 Gew% eines Esters der (Meth)acrylsäure mit einem Acetal, Ketal oder Carbonat von Glycerin, substituiertem Glycerin oder Trimethylolpropan,
c) 3,5 Gew% bis 90 Gew% (Meth)acrylate und/oder mit (Meth)acrylaten copolymerisierbare Komponenten,
d) 0 Gew% bis 5 Gew% Beschleuniger und
gegebenenfalls weitere Hilfsstoffe.

3. Reaktionsharz gemäß Anspruch 1, **dadurch gekennzeichnet, dass** das Reaktionsharz zusätzlich e) 1 Gew% bis 60 Gew% Präpolymere enthält.

4. Reaktionsharz gemäß Anspruch 3, **dadurch gekennzeichnet, dass** es sich bei den Präpolymeren e) um Poly(meth)acrylate oder Polyester handelt.

5. Reaktionsharz gemäß Anspruch 1, **dadurch gekennzeichnet, dass** es sich bei der Komponente b) um Glycerinformal(meth)acrylat, um Trimethylolpropan-formal-(meth)acrylat oder um Isopropylidenglycerin(meth)acrylat (Solketal-methacrylat) handelt.

6. Kaltplastik, **dadurch gekennzeichnet,**
**dass** die Kaltplastik folgende Komponenten aufweist:
5 Gew% bis 99 Gew% eines Reaktionsharzes gemäß einem der Ansprüche 1 bis 5, enthaltend mindestens 0,1 Gew% ein oder mehrere Beschleuniger oder Initiatoren d)
0,1 Gew% bis 5 Gew% einer Mischung, enthaltend ein oder mehrere Initiatoren oder Beschleuniger f), wobei es sich bei Komponente d) um einen Initiator und gleichzeitig bei Komponente f) um einen Beschleuniger handelt oder bei Komponente d) um einen Beschleuniger und bei Komponente f) um einen Initiator handelt, und Initiatoren und Beschleuniger vor dem Herstellen der Kaltplastik getrennt voneinander vorliegen.

7. Kaltplastik gemäß Anspruch 6, **dadurch gekennzeichnet,**
**dass** die Kaltplastik folgende Komponenten aufweist:
9 Gew% bis 45 Gew% eines Reaktionsharzes gemäß einem der Ansprüche 1 bis 5, enthaltend mindestens 0,1 Gew% ein oder mehrere Beschleuniger oder Initiatoren d)
0,1 Gew% bis 5 Gew% einer Mischung, enthaltend ein oder mehrere Initiatoren, oder Beschleuniger f), wobei es sich bei Komponente d) um einen Initiator und gleichzeitig bei Komponente f) um einen Beschleuniger handelt oder bei Komponente d) um einen Beschleuniger und bei Komponente f) um einen Initiator handelt, und Initiatoren und Beschleuniger vor dem Herstellen der Kaltplastik getrennt voneinander vorliegen,
0 Gew% bis 15 Gew% eines anorganischen Pigments, bevorzugt Titandioxid und
10 Gew% bis 90 Gew% Glasperlen, organische oder mineralische Füllstoffe.

8. Kaltplastik gemäß Anspruch 6 oder 7, **dadurch gekennzeichnet,**
**dass** es sich bei den Initiatoren um ein oder mehrere Peroxide und bei den Beschleunigern um ein oder mehrere Amine handelt.

9. Kaltplastik gemäß Anspruch 8, **dadurch gekennzeichnet,**
**dass** es sich bei dem Peroxid um Dilauroylperoxid und/oder Dibenzoylperoxid und bei dem Amin um ein tertiäres, aromatisch substituiertes Amin handelt.

10. Kaltplastik gemäß einem der Ansprüche 6 bis 9, **dadurch gekennzeichnet, dass** der Beschleuniger Bestandteil des Reaktionsharzes gemäß einem der Ansprüche 1 bis 5 ist, und
dass der Initiator nicht Bestandteil des Reaktionsharzes, sondern einer getrennten Komponente der Kaltplastik ist.

11. Kaltplastik gemäß einem der Ansprüche 6 bis 10, **dadurch gekennzeichnet, dass** die Komponenten vor oder während dem Applizieren gemischt werden.

12. Verwendung einer Kaltplastik gemäß einem der Ansprüche 6 bis 11 zur Herstellung von Fahrbahnmarkierungen, Fahrbahnreparaturmassen, Intumeszenzbeschichtungen, oder Bodenbeschichtungen.

13. Verwendung einer Kaltplastik gemäß Anspruch 6 als Gießharz, Bautenschutz, Beschichtungs- oder Laminierungsmittel.

## Claims

1. (Meth)acrylate-based reactive resin, **characterized in that**
the reactive resin has the following ingredients:
a) 0.5% to 30% by weight of crosslinker(s),
b) 5% to 99.5% by weight of an ester of (meth)acrylic acid with an alcohol having a cyclic radical containing at least two oxygen atoms,
c) 0% to 90% by weight of other (meth)acrylates and/or components copolymerizable with (meth)acrylates,
d) 0% to 5% by weight of accelerator or initiator and
optionally other auxiliaries.

2. Reactive resin according to Claim 1, **characterized in that**
the reactive resin has the following ingredients:
a) 0.5% to 30% by weight of dimethacrylates,
b) 5% to 96% by weight of an ester of (meth)acrylic acid with an acetal, ketal or carbonate of glycerol, substituted glycerol or trimethylolpropane,
c) 3.5% to 90% by weight of (meth)acrylates and/or components copolymerizable with (meth)acrylates,
d) 0% to 5% by weight of accelerator(s) and optionally other auxiliaries.

3. Reactive resin according to Claim 1, **characterized in that** the reactive resin further comprises e) 1% to 60% by weight of prepolymers.

4. Reactive resin according to Claim 3, **characterized in that** the prepolymers e) are poly (meth) acrylates or polyesters.

5. Reactive resin according to Claim 1, **characterized in that** the component b) is glycerol formal(meth)acrylate, trimethylolpropane formal(meth)acrylate or isopropylideneglycerol (meth)acrylate (Solketal methacrylate).

6. Cold plastic, **characterized in that** the cold plastic has the following components:
5% to 99% by weight of a reactive resin according to any of Claims 1 to 5,
comprising at least 0.1% by weight of one or more accelerators or initiators d),
0.1% to 5% by weight of a mixture comprising one or more
initiators or accelerators f), where component d) comprises an initiator and at the same time component f) comprises an accelerator, or component d) comprises an accelerator and component f) comprises an initiator, and initiators and accelerators are present separately from one another before the cold plastic is produced.

7. Cold plastic according to Claim 6, **characterized in that**
the cold plastic has the following components:
9% to 45% by weight of a reactive resin according to any of Claims 1 to 5,
comprising at least 0.1% by weight of one or more accelerators or initiators d),
0.1% to 5% by weight of a mixture comprising one or more
initiators or accelerators f), where component d) comprises an initiator and at the same time component f) comprises an accelerator, or component d) comprises an accelerator and component f) comprises an initiator, and initiators and accelerators are present separately from one another before the cold plastic is produced,
0% to 15% by weight of a inorganic pigment, preferably titanium dioxide, and
10% to 90% by weight of glass beads, organic or mineral fillers.

8. Cold plastic according to Claim 6 or 7,
**characterized in that**
the initiators comprise one or more peroxides and the accelerators comprise one or more amines.

9. Cold plastic according to Claim 8, **characterized in that**
the peroxide is dilauroyl peroxide and/or dibenzoyl peroxide and the amine is a tertiary, aromatically substituted amine.

10. Cold plastic according to any of Claims 6 to 9,
**characterized in that**
the accelerator is part of the reactive resin according to any of Claims 1 to 5, and
**in that** the initiator is not part of the reactive resin, but is instead a separate component of the cold plastic.

11. Cold plastic according to any of Claims 6 to 10,
**characterized in that**
the components are mixed before or during application.

12. Use of a cold plastic according to any of Claims 6 to 11 for producing trafficway markings, trafficway repair compositions, intumescent coatings or floor coatings.

13. Use of a cold plastic according to Claim 6 as casting resin, architectural preservative, coating material or laminating material.

## Revendications

1. Résine réactive à base de (méth)acrylate, **caractérisée en ce que** la résine réactive comporte les composants suivants :
a) 0,5 % en poids à 30 % en poids d'agent de réticulation,
b) 5 % en poids à 99,5 % en poids d'un ester de l'acide (méth)acrylique avec un alcool qui comporte un radical cyclique, contenant au moins deux atomes d'oxygène,
c) 0 % en poids à 90 % en poids d'autres (méth)acrylates et/ou de composants copolymérisables avec des (méth)acrylates,
d) 0 % en poids à 5 % en poids d'accélérateur ou d'amorceur et
éventuellement d'autres additifs.

2. Résine réactive selon la revendication 1, **caractérisée en ce que** la résine réactive comporte les composants suivants :
a) 0,5 % en poids à 30 % en poids de diméthacrylates,
b) 5 % en poids à 96 % en poids d'un ester de l'acide (méth)acrylique avec un acétal, cétal ou carbonate de glycérol, glycérol substitué ou triméthylolpropane,
c) 3,5 % en poids à 90 % en poids de (méth)acrylates et/ou de composants copolymérisables avec des (méth)acrylates,
d) 0 % en poids à 5 % en poids d'accélérateur et éventuellement d'autres additifs.

3. Résine réactive selon la revendication 1, **caractérisée en ce que** la résine réactive contient en outre e) 1 % en poids à 60 % en poids de prépolymères.

4. Résine réactive selon la revendication 3, **caractérisée en ce que** pour ce qui est des prépolymères e) il s'agit de poly(méth)acrylates ou de polyesters.

5. Résine réactive selon la revendication 1, **caractérisée en ce que** pour ce qui est du composant b) il s'agit de formal(méth)acrylate de glycérol, de formal-(méth)acrylate de triméthylolpropane ou de (méth)acrylate d'isopropylidèneglycérol (méthacrylate de solcétal).

6. Matière plastique à froid, **caractérisée en ce que**
la matière plastique à froid comporte les composants suivants :
5 % en poids à 99 % en poids d'une résine réactive selon l'une quelconque des revendications 1 à 5, contenant au moins 0,1 % en poids d'un ou de plusieurs accélérateurs ou amorceurs d)
0,1 % en poids à 5 % en poids d'un mélange contenant un ou plusieurs amorceurs ou accélérateurs f), le composant d) consistant en un amorceur et en même temps le composant f) consistant en un accélérateur ou le composant d) consistant en un accélérateur et le composant f) consistant en un amorceur, et les amorceurs et les accélérateurs se trouvant séparés les uns des autres avant la production de la matière plastique à froid.

7. Matière plastique à froid selon la revendication 6, **caractérisée en ce que**
la matière plastique à froid comporte les composants suivants :
9 % en poids à 45 % en poids d'une résine réactive selon l'une quelconque des revendications 1 à 5, contenant au moins 0,1 % en poids d'un ou de plusieurs accélérateurs ou amorceurs d)
0,1 % en poids à 5 % en poids d'un mélange contenant un ou plusieurs amorceurs ou accélérateurs f), le composant d) consistant en un amorceur et en même temps le composant f) consistant en un accélérateur ou le composant d) consistant en un accélérateur et le composant f) consistant en un amorceur, et les amorceurs et les accélérateurs se trouvant séparés les uns des autres avant la production de la matière plastique à froid
0 % en poids à 15 % en poids d'un pigment inorganique, dioxyde de titane de préférence et
10 % en poids à 90 % en poids de perles de verre, de charges organiques ou minérales.

8. Matière plastique à froid selon la revendication 6 ou 7, **caractérisée en ce que** pour ce qui est des amorceurs il s'agit d'un ou de plusieurs peroxydes et pour ce qui est des accélérateurs il s'agit d'une ou de plusieurs amines.

9. Matière plastique à froid selon la revendication 8, **caractérisée en ce que**
pour ce qui est du peroxyde il s'agit de peroxyde de dilauroyle et/ou de peroxyde de dibenzoyle et pour ce qui est de l'amine il s'agit d'une amine aromatique tertiaire substituée.

10. Matière plastique à froid selon l'une quelconque des revendications 6 à 9, **caractérisée en ce que**
l'accélérateur est un composant de la résine réactive selon l'une quelconque des revendications 1 à 5, et
**en ce que** l'amorceur n'est pas un composant de la résine réactive, mais un composant séparé de la matière plastique à froid.

11. Matière plastique à froid selon l'une quelconque des revendications 6 à 10, **caractérisée en ce que** les composants sont mélangés avant ou pendant l'application.

12. Utilisation d'une matière plastique à froid selon l'une quelconque des revendications 6 à 11, pour la production de marquages de voies de circulation, de matières de réparation de voies de circulation, de revêtements intumescents ou de revêtements de sol.

13. Utilisation d'une matière plastique à froid selon la revendication 6, en tant que résine de coulée, protection de bâtiments, produit de revêtement ou de stratification.
